# FASCICULE DE BREVET EUROPEEN

(11) **EP 3 953 149 B1**
(45) Date de publication et mention de la délivrance du brevet: **31.05.2023**
(21) Numéro de dépôt: 20717634.8
(22) Date de dépôt: 06.04.2020
(51) Int. Cl.: B29C 64/205, B29C 64/153, B33Y 30/00, B33Y 40/00, B22F 10/28, B22F 12/50, B22F 12/60

(54) **MACHINE DE FABRICATION ADDITIVE COMPRENANT UNE SURFACE DE RÉCEPTION DE POUDRE MOBILE ET OPTIMISÉE POUR RETENIR LES GRAINS DE POUDRE**
MASCHINE ZUR GENERATIVEN FERTIGUNG MIT EINER BEWEGLICHEN OBERFLÄCHE ZUR AUFNAHME VON PULVER, DIE SO OPTIMIERT IST, DASS SIE DIE PULVERKÖRNER ZURÜCKHÄLT
ADDITIVE MANUFACTURING MACHINE COMPRISING A MOVABLE SURFACE FOR RECEIVING POWDER OPTIMISED TO RETAIN THE GRAINS OF POWDER

(30) Priorité: 08.04.2019 FR 1903718
(43) Date de publication de la demande: 16.02.2022
(73) Titulaire: AddUp, 63118 Cébazat (FR)
(72) Inventeur: MOTTIN, Jean-Baptiste, 63118 CEBAZAT (FR)
(74) Mandataire: Barascou, Frédéric
(86) Numéro de dépôt international: PCT/EP2020/059752
(87) Numéro de publication internationale: WO 2020/207967

(56) Documents cités:
- WO-A1-2010/095987
- WO-A1-2017/108868
- US-A1- 2013 186 514

## Description

L'invention se situe dans le domaine de la fabrication additive à base de poudre par fusion des grains de cette poudre à l'aide d'une ou plusieurs sources d'énergie ou de chaleur comme un faisceau laser et/ou un faisceau d'électrons et/ou des diodes.

Plus précisément, l'invention se situe dans le domaine de la fabrication additive par dépôt de lit de poudre et elle concerne la mise en couche de la poudre de fabrication additive à l'intérieur d'une machine de fabrication additive par dépôt de lit de poudre.

Plus précisément encore, l'invention vise à réduire la quantité de poudre utilisée pour la réalisation de chaque couche de poudre et à améliorer la qualité du lit de poudre.

La demande WO2017108868 décrit une machine de fabrication additive par dépôt de lit de poudre comprenant un plan de travail et au moins une zone de travail où des couches de poudre sont étalées et consolidées de manière sélective successivement les unes après les autres.

La machine décrite dans la demande WO2017108868 comprend un dispositif de dépôt d'une couche de poudre sur la zone de travail et une source de chaleur ou d'énergie utilisée pour consolider de manière sélective une couche de poudre déposée sur la zone de travail. Le dispositif de dépôt comprend un tiroir de réception de poudre se déplaçant à proximité de la zone de travail, un dispositif de distribution d'un cordon de poudre sur le tiroir, et un dispositif d'étalement du cordon de poudre du tiroir vers la zone de travail.

Afin de garantir la qualité des pièces fabriquées, la poudre doit recouvrir de manière homogène toute la zone travail ou au moins les parties de la zone de travail dans lesquelles des pièces sont fabriquées. A cet effet, la poudre est déposée en excès sur le tiroir, et l'excédent de poudre non utilisé pour la réalisation de la couche de poudre est repoussé par le dispositif d'étalement jusqu'à un réservoir de récupération de poudre.

Même si l'excédent de poudre récupéré dans le réservoir peut être recyclé, il est préférable de limiter la quantité de poudre déposée en excès sur le tiroir et devant être recyclée. En effet, il est toujours préférable de limiter la consommation de poudre de la machine et de limiter la quantité de poudre à recycler car ce recyclage peut être coûteux.

Le contrôle du débit du dispositif de distribution de poudre et le contrôle des déplacements du tiroir permettent de doser au mieux la quantité de poudre formant le cordon de poudre qui va être étalée par le dispositif d'étalement sur la zone de travail.

Toutefois, lors des déplacements du tiroir, la poudre déposée sur le tiroir peut subir des vibrations et des secousses ayant pour conséquence une chute d'une certaine quantité des grains de poudre déposée sur le tiroir. Aussi, on augmente généralement la quantité de poudre déposée en excès sur le tiroir pour compenser la chute d'une certaine quantité de poudre pendant les déplacements du tiroir.

Dans le cas de poudres de fabrication additive ayant une forte coulabilité, il est nécessaire d'augmenter de manière importante la quantité de poudre déposée en excès sur le tiroir pour compenser la chute d'une quantité plus importante de grains de poudre.

La présente invention a pour objectif d'améliorer la rétention des grains de poudre sur une surface de réception de poudre mobile dans une machine de fabrication additive, notamment pour limiter et/ou éviter la chute d'une certaine quantité de grains de poudre sous l'effet de vibrations ou de secousses subies par la surface de réception mobile pendant ses déplacements.

A cet effet, l'invention a pour objet une machine de fabrication additive par dépôt de lit de poudre, conformément à la revendication 1.

Selon l'invention, l'élément mobile prend la forme d'un tiroir monté mobile en translation dans une direction horizontale transversale par rapport à la zone de travail et se déplaçant entre une position rétractée dans laquelle ce tiroir se situe en dehors de la trajectoire du dispositif d'étalement de poudre et une position déployée dans laquelle ce tiroir s'étend au moins en partie dans la trajectoire du dispositif d'étalement de poudre ou l'élément mobile entourant extérieurement la zone de travail sur toute sa circonférence et se déplaçant en rotation autour de la zone de travail, au moins une partie de la surface supérieure d'un élément mobile se situe au-dessus de la surface supérieure du plan de travail et/ou au moins une partie de la surface supérieure d'un élément mobile se situe au-dessous de la surface supérieure du plan de travail.

La ou les parties de la surface supérieure de l'élément mobile qui se situent au-dessus et/ou au-dessous de la surface supérieure du plan de travail permettent d'augmenter la rugosité et/ou la surface de contact relative entre les grains de poudre déposés sur l'élément mobile et la surface supérieure de l'élément mobile. L'augmentation de la rugosité et/ou de la surface de contact relative permet de retenir les grains de poudre sur la surface supérieure de l'élément mobile, notamment pendant des déplacements de cet élément mobile.

D'autres caractéristiques et avantages de l'invention apparaîtront dans la description qui va suivre. Cette description, donnée à titre d'exemple et non limitative, se réfère aux dessins joints en annexe sur lesquels :
- la figure 1 est une vue schématique de face d'une première variante d'une machine de fabrication additive pouvant être améliorée avec l'invention,
- la figure 2 est une vue schématique de dessus d'une première variante d'une machine de fabrication additive pouvant être améliorée avec l'invention,
- la figure 3 est une vue schématique de côté d'une première variante d'une machine de fabrication additive pouvant être améliorée avec l'invention,
- la figure 4 est une vue schématique de dessus d'une seconde variante d'une machine de fabrication additive pouvant être améliorée avec l'invention,
- la figure 5 est une vue schématique en coupe transversale d'un premier mode de réalisation qui n'est pas couvert par les revendications,
- les figures 6, 7 et 8 sont des vues schématiques en coupe transversale de différentes variantes de réalisation selon l'invention,
- les figures 9, 10 et 11 illustrent différents motifs pouvant être utilisés dans le mode de réalisation de l'invention des figures 6, 7 et 8,
- la figure 12 est une vue schématique en coupe transversale d'un autre mode de réalisation de l'invention,
- la figure 13 est une vue schématique de dessus du mode de réalisation de l'invention de la figure 12,
- les figures 14 et 15 illustrent le principe de fonctionnement de l'invention dans le mode de réalisation des figures 12 et 13.

L'invention est relative à une machine de fabrication additive par dépôt de lit de poudre. La fabrication additive par dépôt de lit de poudre est un procédé de fabrication additif dans lequel une ou plusieurs pièces sont fabriquées par la fusion sélective de différentes couches de poudre de fabrication additive superposées les unes sur les autres. La première couche de poudre est déposée sur un support tel un plateau, puis frittée ou fusionnée sélectivement à l'aide d'une ou plusieurs sources d'énergie ou de chaleur selon une première section horizontale de la ou des pièces à fabriquer. Puis, une deuxième couche de poudre est déposée sur la première couche de poudre qui vient d'être fusionnée ou frittée, et cette deuxième couche de poudre est frittée ou fusionnée sélectivement à son tour, et ainsi de suite jusqu'à la dernière couche de poudre utile à la fabrication de la dernière section horizontale de la ou des pièces à fabriquer.

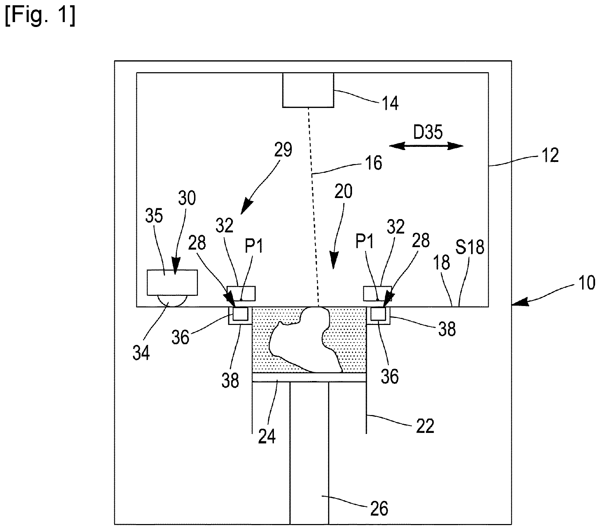

Comme l'illustre la figure 1 et afin de permettre une fabrication additive de pièces par dépôt de lit de poudre, la machine 10 de fabrication additive selon l'invention comprend par exemple une enceinte de fabrication 12 et au moins une source 14 de chaleur ou d'énergie utilisée pour fusionner de manière sélective, via un ou plusieurs faisceaux 16, une couche de poudre de fabrication additive déposée à l'intérieur de l'enceinte de fabrication 12.

La ou les sources de chaleur ou d'énergie 14 peuvent prendre la forme de sources capables de produire un ou plusieurs faisceaux d'électrons et/ou un ou plusieurs faisceaux laser. Ces sources sont par exemple un ou plusieurs canons d'électrons et/ou une ou plusieurs sources laser. La ou les sources 14 sont par exemple fixes par rapport à l'enceinte de fabrication 12. Afin de permettre une fusion sélective et donc un déplacement du ou des faisceaux d'énergie ou de chaleur 16, chaque source 14 comprend des moyens de déplacement et de contrôle du ou des faisceaux 16. Alternativement, la ou les sources de chaleur ou d'énergie 14 peuvent être montées mobiles à l'intérieur de l'enceinte de fabrication 12, par exemple lorsque ces sources sont des diodes émettant un faisceau laser.

L'enceinte de fabrication 12 est une enceinte fermée. Une paroi de cette enceinte de fabrication 12 peut comprendre une vitre permettant d'observer la fabrication en cours à l'intérieur de l'enceinte. Au moins une paroi de cette enceinte de fabrication 12 comprend une ouverture donnant accès à l'intérieur de l'enceinte pour des opérations de maintenance ou de nettoyage, cette ouverture pouvant être refermée de manière étanche à l'aide d'une porte pendant un cycle de fabrication. Pendant un cycle de fabrication, l'enceinte de fabrication 12 peut être remplie avec un gaz inerte tel l'azote pour éviter d'oxyder la poudre de fabrication additive et/ou pour éviter les risques d'incendie ou d'explosion. L'enceinte de fabrication 12 peut être maintenue en légère surpression pour éviter les entrées d'oxygène, ou maintenue sous vide lorsqu'un faisceau d'électrons est utilisé à l'intérieur de l'enceinte pour fritter ou fusionner la poudre.

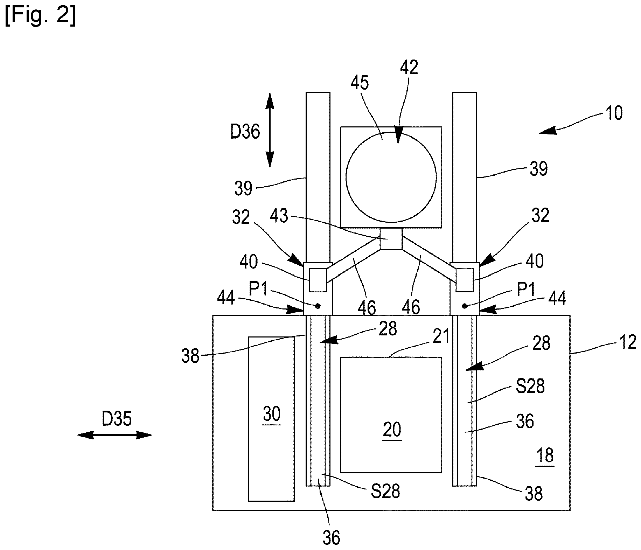

A l'intérieur de l'enceinte de fabrication 12, la machine 10 de fabrication additive selon l'invention comprend par exemple une zone de travail 20 et un dispositif de dépôt 29 d'une couche de poudre sur la zone de travail 20. La machine comprenant un plan de travail horizontal 18 avec une surface supérieure S18, la zone de travail 20 se situe par exemple dans le plan de travail 18. Comme l'illustre la figure 2, une zone de travail 20 est par exemple définie par une ouverture 21 prévue dans le plan de travail horizontal 18 et par une chemise de fabrication 22 et un plateau de fabrication 24. La chemise 22 s'étend verticalement sous le plan de travail 18 et elle débouche dans le plan de travail 18 par l'ouverture 21. Le plateau de fabrication 24 coulisse verticalement à l'intérieur de la chemise de fabrication 22 sous l'effet d'un actionneur 26 tel un vérin.

Afin de réaliser les différentes couches de poudre utiles à la fabrication additive de la ou des pièces à fabriquer, le dispositif de dépôt 29 comprend par exemple un élément mobile 28 de réception de poudre se déplaçant par rapport au plan de travail et à proximité de la zone de travail 20, un dispositif de distribution 32 d'un cordon de poudre sur l'élément mobile, et un dispositif d'étalement 30 du cordon de poudre depuis l'élément mobile vers la zone de travail.

Un dispositif de distribution 32 d'un cordon de poudre est par exemple monté de manière fixe par rapport à l'enceinte de fabrication 12 et au plan de travail 18.

Le dispositif d'étalement 30 prend la forme d'une raclette et/ou d'un ou plusieurs rouleaux 34 montés sur un chariot 35. Ce chariot 35 est monté mobile en translation dans une direction horizontale longitudinale D35 au-dessus de la zone de travail 20. Afin d'être entraîné en translation horizontale longitudinale, le chariot 35 peut être motorisé ou mis en mouvement par un moteur (non représenté) se situant à l'extérieur de l'enceinte de fabrication 12 et relié au chariot par un système de transmission de mouvement tels des poulies et une courroie.

Dans une première variante illustrée par les figures 1, 2 et 3, la machine de fabrication additive selon l'invention peut comprendre deux éléments mobiles 28 de réception de poudre et deux dispositifs de distribution 32 d'un cordon de poudre, chaque élément mobile réceptionnant de la poudre distribuée par au moins un dispositif de distribution. Plus en détail, un élément mobile et un dispositif de distribution sont prévus de chaque côté de la zone de travail 20 dans la direction horizontale longitudinale D35 de déplacement du chariot 35 du dispositif d'étalement 30. Ainsi, le dispositif d'étalement de poudre ne fait pas de trajet inutile au-dessus de la zone de travail car il peut étaler de la poudre dans les deux sens de sa direction horizontale longitudinale D35 de déplacement.

Comme le montre la figure 2, un élément mobile 28 se déplace en translation à proximité de la zone de travail. A cet effet, un élément mobile 28 prend par exemple la forme d'un tiroir 36. Un tiroir 36 est monté mobile en translation dans une direction horizontale transversale D36 par rapport à la zone de travail 20. Un tiroir 36 se déplace entre une position rétractée dans laquelle ce tiroir se situe en dehors de la trajectoire du dispositif d'étalement de poudre 30 et une position déployée dans laquelle ce tiroir s'étend au moins en partie dans la trajectoire du dispositif d'étalement de poudre 30. Par exemple, la direction horizontale transversale D36 dans laquelle se déplace un tiroir 36 est perpendiculaire à la direction horizontale longitudinale D35 de déplacement du chariot 35 du dispositif d'étalement 30. Le tiroir 36 est par exemple entraîné en translation par un actionneur tel un vérin (non représenté).

Un dispositif de distribution 32 est prévu au-dessus de chaque tiroir 36, et donc au-dessus de chaque élément mobile 28. Chaque tiroir 36, et donc chaque élément mobile 28, est de forme allongée dans la direction horizontale transversale D36. Chaque tiroir 36, et donc chaque élément mobile 28, se déplace sous le dispositif de distribution de poudre lorsque le tiroir passe de sa position rétractée à sa position déployée.

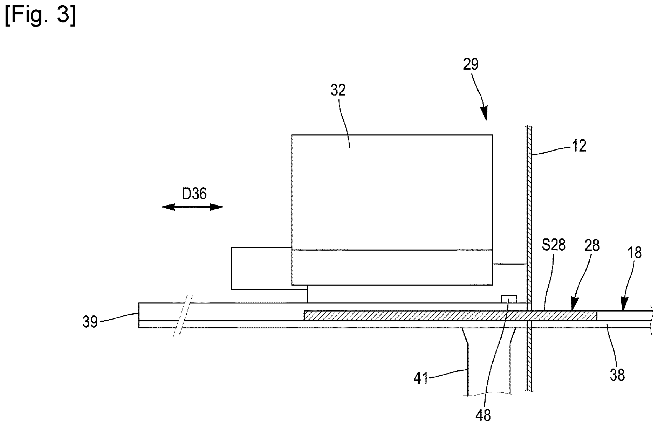

Comme le montrent les figures 2 et 3, chaque tiroir 36 est monté mobile en translation dans un logement 38 prévu dans le plan de travail 18 de l'enceinte de fabrication 12. Chaque tiroir 36 se déplace en translation dans un plan horizontal. Dans sa position rétractée, le tiroir 36 se situe par exemple dans un fourreau 39 relié de manière étanche à l'enceinte de fabrication 12 et monté en regard du logement 38, tel une rainure, prévu dans le plan de travail. Lorsqu'il est en position déployée, un tiroir 36 se situe dans le logement 38. Un logement 38 et le fourreau 39 s'étendent dans la direction horizontale transversale D36 dans laquelle se déplace un tiroir 36. Chaque logement 38 s'étend à proximité d'une zone de travail 20. Avantageusement, un fourreau 39 est équipé d'une trémie 41 permettant de récupérer les grains de poudre chutant depuis le tiroir.

En étant monté mobile en translation à proximité d'une zone de travail 20 et dans le plan de travail 18, chaque tiroir 36 occupe un encombrement très réduit à proximité de la zone de travail 20.

Chaque élément mobile 28 prenant la forme d'un tiroir mobile en translation, une zone de travail 20 prend par exemple une forme rectangulaire. Toutefois, une zone de travail 20 peut aussi prendre d'autres formes plus adaptées aux formes de la ou des pièces à fabriquer, comme par exemple une forme circulaire, ovale, ou annulaire.

En vue de la réalisation d'une couche de poudre sur la zone de travail 20, un dispositif de distribution 32 délivre de la poudre sous forme d'un cordon sur la surface supérieure S28 d'un élément mobile 28, puis la raclette et/ou le ou les rouleaux du dispositif d'étalement de poudre étalent la poudre déposée sous forme de cordon sur la zone de travail 20. Pour la réalisation d'un cordon de poudre sur la surface supérieure S28 d'un élément mobile 28, cet élément mobile 28 se déplace en translation sous un dispositif de distribution de poudre 32.

Comme l'illustre la figure 2, un dispositif de distribution de poudre 32 comprend un réservoir tampon 40 relié à une alimentation en poudre 42 et un point de distribution de poudre P1 en-dessous duquel se déplace un élément mobile 28. L'alimentation en poudre 42 prend par exemple la forme d'une vanne 43 à laquelle est reliée de manière amovible un container 45. Le container 45 contient la poudre destinée à alimenter le réservoir tampon 40 d'un dispositif de distribution 32 pendant un cycle de fabrication. La vanne 43 permet d'autoriser ou d'interdire le passage de la poudre vers un dispositif de distribution de poudre 32. Alternativement, l'alimentation en poudre 42 peut aussi prendre la forme d'un circuit d'alimentation de poudre automatisé et permettant par exemple d'alimenter en poudre une pluralité de machines de fabrication additive.

Comme l'illustre la figure 2, le réservoir tampon 40 d'un dispositif de distribution de poudre 32 est relié à une alimentation en poudre 42, et notamment à la vanne 43, par un conduit 46. Dans le cas où la machine 10 comprend deux dispositifs de distribution de poudre 32 prévus de part et d'autre d'une même zone de travail, ces deux dispositifs de distribution de poudre 32 sont par exemple reliés à une même alimentation en poudre 42, et donc à une même vanne 43.

Un dispositif de distribution de poudre 32 permet de délivrer un débit de poudre stable et maîtrisé en un point de distribution P1 sous lequel se déplace un élément mobile 28. Plus en détail, la sortie 58 du dispositif de distribution 32 correspond au point de distribution de poudre P1. Comme l'illustre la figure 3, un dispositif de distribution de poudre 32 est par exemple monté au-dessus du fourreau 39.

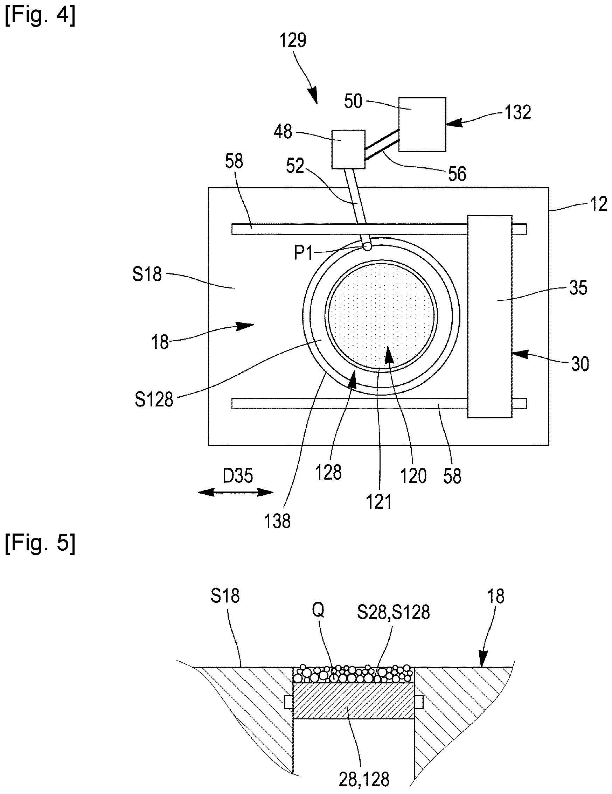

Dans une seconde variante de la machine selon l'invention illustrée en figure 4, le dispositif de dépôt 129 d'une couche de poudre comprend un élément mobile 128 de réception de poudre entourant la zone de travail 120, un dispositif de distribution 132 d'un cordon de poudre sur l'élément mobile 128 et un dispositif d'étalement 30 de la poudre déposée sur l'élément mobile 128.

Dans cette seconde variante, la zone de travail 120 est circulaire. L'ouverture 121 prévue dans le plan de travail 18 et définissant cette zone de travail est aussi circulaire.

Par exemple, l'élément mobile 128 entoure extérieurement la zone de travail 120 sur toute sa circonférence. L'élément mobile 128 prend la forme d'un anneau et la surface supérieure S128 de l'élément mobile est annulaire. L'élément mobile 128 se déplace à proximité de la zone de travail 120 dans un logement 138 prévu dans le plan de travail 18. Ce logement 138 prend par exemple la forme d'un évidement annulaire réalisé dans le plan de travail 18 autour de la zone de travail 120.

Plus en détail, l'élément mobile 128 se déplace en rotation autour de la zone de travail 120. L'élément mobile est entraîné en rotation autour de la zone de travail 120 par au moins un actionneur tel un moteur (non représenté). L'élément mobile est entraîné en rotation autour d'un axe vertical. En étant monté mobile en rotation autour de la zone de travail 120 et de forme annulaire, l'élément mobile 28 offre un encombrement réduit autour de la zone de travail 120.

Dans cette seconde variante, le dispositif de distribution 32 d'un cordon de poudre sur la surface supérieure S128 de l'élément mobile 128 comprend un réservoir tampon 48 relié à une alimentation en poudre 50 et un conduit de distribution 52 reliant le réservoir tampon 48 à un point de distribution de poudre P1 situé au-dessus de l'élément mobile 128. Le conduit de distribution 52 est par exemple monté sur un dispositif vibrant (non représenté) de façon à générer un flux continu de poudre dans le conduit de distribution et du réservoir tampon 48 vers le point de distribution de poudre P1. Le réservoir tampon 48 peut être fixé de manière rigide au conduit de distribution 52. Le réservoir tampon 48 est fixé à une extrémité amont du conduit de distribution 52, et le point de distribution de poudre P1 se situe à l'autre extrémité aval du conduit de distribution. Le réservoir tampon 48 est par exemple relié à l'alimentation en poudre par un conduit flexible 56. L'alimentation en poudre 50 peut être reliée à un circuit d'alimentation en poudre automatisé ou prendre la forme d'un container amovible.

Dans cette seconde variante, le dispositif d'étalement 30 prend aussi la forme d'une raclette et/ou d'un ou plusieurs rouleaux montés sur un chariot 35. Ce chariot 35 est monté mobile en translation dans une direction horizontale longitudinale D35 au-dessus de la zone de travail 120. Afin d'être guidé en translation horizontale longitudinale, le chariot 35 peut être monté sur des rails 58.

Dans l'une ou l'autre des variantes qui viennent d'être décrites, la surface supérieure S28,S128 d'un élément mobile 28,128 se déplace sous un dispositif de distribution de poudre 32,132 et à proximité d'une zone de travail 20,120. Lors de ces déplacements, l'élément mobile 28,128 peut subir des vibrations et des secousses susceptibles de faire chuter une certaine quantité de poudre du tiroir.

Pour éviter ou au moins limiter la quantité de poudre chutant depuis la surface supérieure S28,S128 d'un élément mobile 28,128 lors d'un déplacement de cet élément mobile 28,128, au moins une partie de la surface supérieure S28,S128 de l'élément mobile se situe au-dessus de la surface supérieure du plan de travail et/ou au moins une partie de la surface supérieure S28,S128 de l'élément mobile se situe au-dessous de la surface supérieure du plan de travail.

Autrement dit, une ou des parties de la surface supérieure S28,S128 de l'élément mobile se situent au-dessus de la surface supérieure S18 du plan de travail, une ou des parties de la surface supérieure S28,S128 de l'élément mobile se situent au-dessous de la surface supérieure S18 du plan de travail, ou une ou des premières parties de la surface supérieure S28,S128 de l'élément mobile se situent au-dessus de la surface supérieure S18 du plan de travail et une ou des secondes parties de la surface supérieure S28,S128 de l'élément mobile se situent au-dessous de la surface supérieure S18 du plan de travail.

En augmentant la rugosité de la surface supérieure S28,S128 de l'élément mobile et/ou en augmentant la surface de contact relative entre les grains de poudre et la surface supérieure de l'élément mobile, la ou les parties de la surface supérieure de l'élément mobile qui se situent au-dessus et/ou au-dessous de la surface supérieure du plan de travail permettent de mieux retenir les grains de poudre sur la surface supérieure de l'élément mobile, notamment pendant des déplacements de cet élément mobile.

Dans un premier mode de réalisation ne faisant pas partie de l'invention, illustré en figure 5, la totalité de la surface supérieure S28,S128 d'un élément mobile 28,128 peut se situer au-dessous de la surface supérieure S18 du plan de travail 18. Dans ce cas de figure, une quantité résiduelle Q de grains de poudre n'est pas emportée par le dispositif d'étalement de poudre 30 vers la zone de travail 20,120. Cette quantité résiduelle Q de grains de poudre permet d'augmenter la surface relative de contact avec les nouveaux grains de poudre qui vont être déposés sur la surface supérieure S28,S128 d'un élément mobile 28,128 par un dispositif de distribution 32,132. Par exemple, la surface supérieure S28,S128 de l'élément mobile 28,128 se situe entre 60 micromètres et 5 millimètres, ou entre 100 micromètres et 1 millimètre, au-dessous de la surface supérieure S18 du plan de travail 18.

Selon l'invention, au moins une partie de la surface supérieure S28,S128 d'un élément mobile se situe dans le prolongement de la surface supérieure du plan de travail, et l'élément mobile comprend aussi au moins une forme en relief 60 s'élevant au-dessus de sa surface supérieure et/ou au moins une forme en creux 62 s'étendant au-dessous de sa surface supérieure.

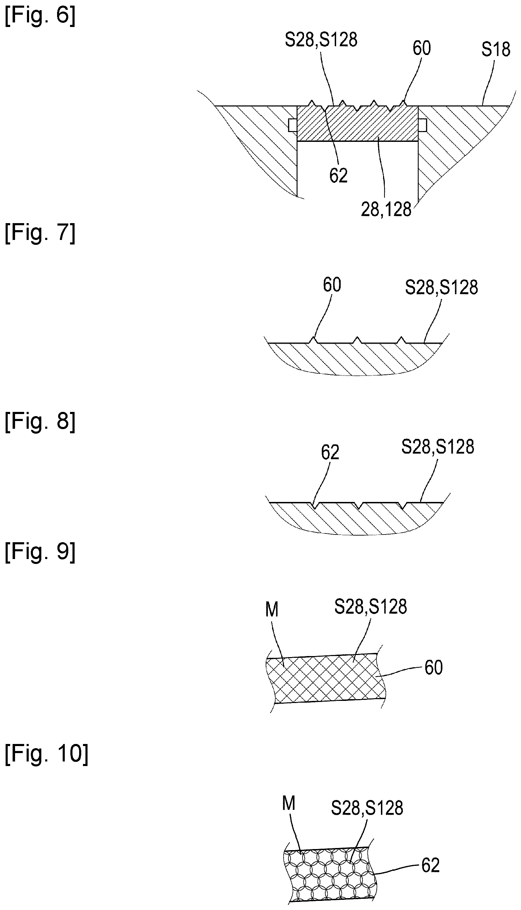

Comme l'illustre la figure 6, un élément mobile peut comprendre des formes en relief 60 s'élevant au-dessus de sa surface supérieure et des formes en creux 62 s'étendant au-dessous de sa surface supérieure.

Comme l'illustre la figure 7, un élément mobile peut comprendre uniquement des formes en relief 60 s'élevant au-dessus de sa surface supérieure.

Comme l'illustre la figure 8, un élément mobile peut comprendre uniquement des formes en creux 62 s'étendant au-dessous de sa surface supérieure.

Les formes en relief 60 et les formes en creux 62 peuvent par exemple être obtenue par usinage laser. Les formes en relief peuvent par exemple être imprimées sur la surface supérieure de l'élément mobile, par exemple avec un procédé de fabrication additive. Les formes en creux 62 sont par exemple usinées, c'est-à-dire obtenues par enlèvement de matière, dans la surface supérieure de l'élément mobile.

Les formes en relief 60 et/ou les formes en creux 62 permettent d'augmenter la surface relative de contact avec les nouveaux grains de poudre qui vont être déposés sur la surface supérieure S28,S128 d'un élément mobile 28,128 par un dispositif de distribution 32,132.

Pour augmenter davantage la rétention des grains de poudre sur la surface supérieure de l'élément mobile, une forme en relief 60 ou une forme en creux 62 est composée d'une pluralité de motifs M élémentaires. Un motif M peut avoir un contour ouvert ou fermé, et ce contour peut prendre diverses formes : circulaire, triangulaire, polygonale, etc.

Dans un premier exemple illustré en figure 9, les motifs M élémentaires sont accolés.

Dans un autre exemple illustré en figure 10, les motifs M sont sécants.

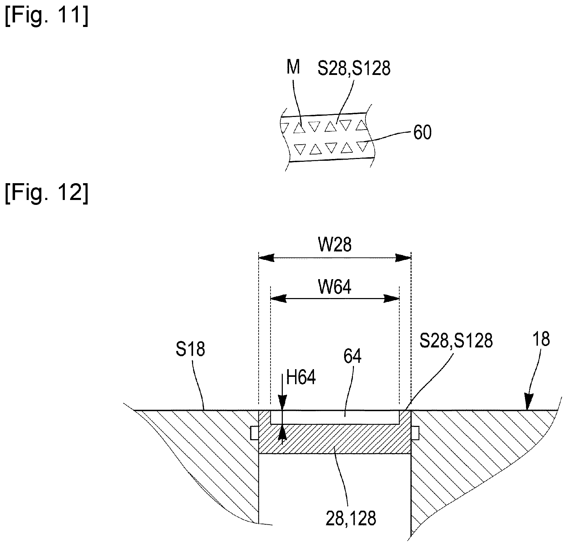

Dans un autre exemple illustré en figure 11, les motifs M sont adjacents sans intersection.

Selon l'invention, éventuellement, une ou des formes en relief et/ou une ou des formes en creux peuvent être prévues sur la surface supérieure S28,S128 d'un élément mobile 28,128 qui se situe au-dessous de la surface supérieure S18 du plan de travail 18.

Dans un autre mode de réalisation selon l'invention illustré par les figures 12 à 15, une unique forme en creux 64 est prévue dans la surface supérieure S28,S128 de l'élément mobile.

Par exemple, l'unique forme en creux 64 prévue dans la surface supérieure de l'élément mobile prend la forme d'un évidement de section rectangulaire dans un plan vertical et d'une hauteur H64 dans une direction verticale comprise entre 60 micromètres et 5 millimètres, ou entre 150 micromètres et 2 millimètres.

Pour maximiser l'augmentation de la surface de contact relative avec les nouveaux grains de poudre déposés par un dispositif de distribution, l'unique forme en creux 64 s'étend sur une largeur W64 au moins égale à 80 % de la largeur W28 de la surface supérieure de l'élément mobile.

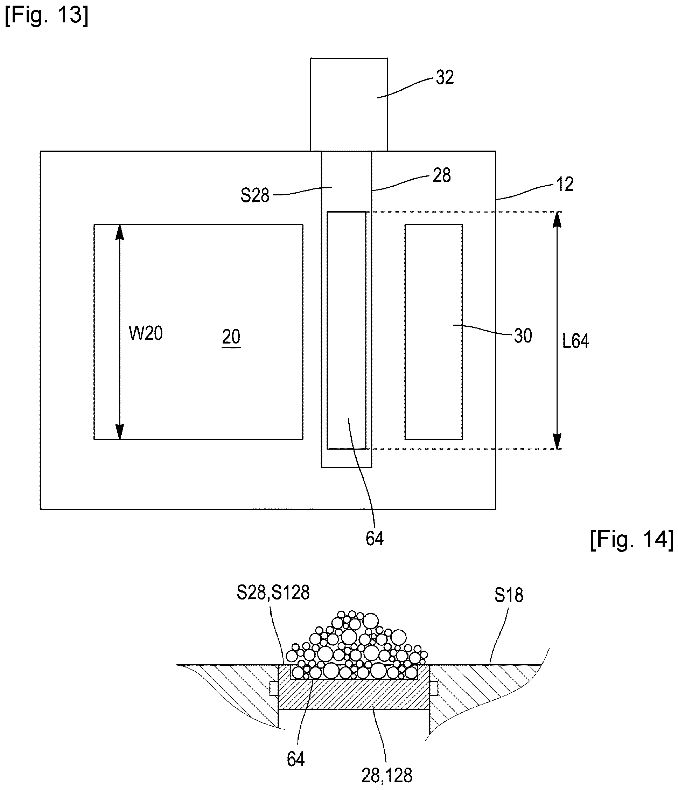

Notamment dans le cas où l'élément mobile 28 prend la forme d'un tiroir et comme l'illustre la figure 13, l'unique forme en creux 64 s'étend en longueur sur une distance supérieure à la plus grande dimension transversale de la zone de travail. Dans le cas où la zone de travail est parallélépipédique et où l'élément mobile 28 prend aussi une forme parallélépipédique, l'unique forme en creux 64 s'étend sur une longueur L64 supérieure à largeur W20 de la zone de travail. On s'assure ainsi de la qualité du lit de poudre déposé sur les bords longitudinaux de la zone de travail.

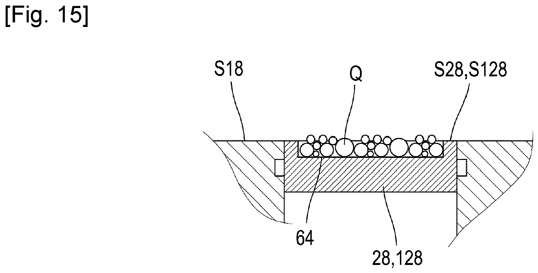

Les figures 14 et 15 illustrent la mise en oeuvre de l'invention avec l'unique forme en creux 64 qui vient d'être décrite. Dans une première étape illustrée en figure 14, un cordon C de poudre est déposé par un dispositif de distribution 32,132 sur l'élément mobile 28,128. Si aucune couche de poudre n'a été réalisée auparavant, la forme en creux 64 est aussi remplie de poudre lors de cette première étape par le dispositif de distribution 32,132. Pour le dépôt du cordon C de poudre, l'élément mobile 28, 128 se déplace par exemple au-dessous du dispositif de distribution 32,132.

Une fois le cordon C de poudre déposé et l'élément mobile 28,128 positionné entre le dispositif d'étalement 30 et la zone de travail 20,120, le dispositif d'étalement est mis en mouvement de manière à étaler le cordon de poudre vers la zone de travail.

Suite au passage du dispositif d'étalement 30 au-dessus de l'élément mobile 28,128, une quantité résiduelle Q de grains de poudre est toujours présente dans la forme en creux 64. Cette quantité résiduelle Q de grains de poudre permet d'augmenter la surface relative de contact avec les nouveaux grains de poudre qui vont être déposés sur la surface supérieure S28,S128 de l'élément mobile 28,128 par un dispositif de distribution 32,132.

## Revendications

1. Machine (10) de fabrication additive par dépôt de lit de poudre, la machine comprenant un plan de travail (18), une zone de travail (20,120), un dispositif de dépôt (29,129) d'une couche de poudre sur la zone de travail et une source de chaleur ou d'énergie (14) utilisée pour consolider de manière sélective une couche de poudre déposée sur la zone de travail, le dispositif de dépôt d'une couche de poudre comprenant un élément mobile (28,128) de réception de poudre se déplaçant par rapport au plan de travail et à proximité de la zone de travail, un dispositif de distribution (32,132) d'un cordon de poudre sur l'élément mobile, et un dispositif d'étalement (30) du cordon de poudre de l'élément mobile vers la zone de travail, l'élément mobile (28) prenant la forme d'un tiroir (36) monté mobile en translation dans une direction horizontale transversale (D36) par rapport à la zone de travail (20) et se déplaçant entre une position rétractée dans laquelle ce tiroir se situe en dehors de la trajectoire du dispositif d'étalement de poudre (30) et une position déployée dans laquelle ce tiroir s'étend au moins en partie dans la trajectoire du dispositif d'étalement de poudre (30) ou l'élément mobile (128) entourant extérieurement la zone de travail (120) sur toute sa circonférence et se déplaçant en rotation autour de la zone de travail (120), au moins une partie de la surface supérieure (S28,S128) dudit élément mobile se situe au-dessus de la surface supérieure (S18) du plan de travail et/ou au moins une partie de la surface supérieure (S28,S128) dudit élément mobile se situe au-dessous de la surface supérieure (S18) du plan de travail, machine de fabrication additive dans laquelle au moins une partie de la surface supérieure dudit élément mobile se situe dans le prolongement de la surface supérieure du plan de travail, et dans laquelle cet élément mobile comprend aussi au moins une forme en relief (60) s'élevant au-dessus de sa surface supérieure et/ou au moins une forme en creux (62) s'étendant au-dessous de sa surface supérieure.

2. Machine (10) de fabrication additive par dépôt de lit de poudre selon la revendication 1, dans laquelle une forme en relief est imprimée sur la surface supérieure de l'élément mobile.

3. Machine (10) de fabrication additive par dépôt de lit de poudre selon la revendication 1, dans laquelle une forme en creux est usinée dans la surface supérieure de l'élément mobile.

4. Machine (10) de fabrication additive par dépôt de lit de poudre selon la revendication 2 ou la revendication 3, dans laquelle une forme en relief ou une forme en creux est composée d'une pluralité de motifs (M) élémentaires.

5. Machine (10) de fabrication additive par dépôt de lit de poudre selon la revendication 1, dans laquelle une unique forme en creux (64) est prévue dans la surface supérieure de l'élément mobile.

6. Machine (10) de fabrication additive par dépôt de lit de poudre selon la revendication 5, dans laquelle l'unique forme en creux prévue dans la surface supérieure de l'élément mobile prend la forme d'un évidement de section rectangulaire dans un plan vertical et d'une hauteur dans une direction verticale comprise entre 60 micromètres et 5 millimètres, ou entre 150 micromètres et 2 millimètres.

7. Machine (10) de fabrication additive par dépôt de lit de poudre selon la revendication 5 ou la revendication 6, dans laquelle l'unique forme en creux s'étend sur une largeur (W64) au moins égale à 80 % de la largeur (W28) de la surface supérieure de l'élément mobile.

8. Machine (10) de fabrication additive par dépôt de lit de poudre selon l'une des revendications 5 à 7, dans laquelle l'unique forme en creux s'étend en longueur sur une distance supérieure à la plus grande dimension transversale de la zone de travail.

9. Machine (10) de fabrication additive par dépôt de lit de poudre selon la revendication 1, dans laquelle l'élément mobile se déplace à proximité de la zone de travail dans un logement (38) prévu dans le plan de travail.

10. Machine (10) de fabrication additive par dépôt de lit de poudre selon l'une des revendications précédentes, dans laquelle, le dispositif de distribution d'un cordon de poudre étant fixe, un élément mobile se déplace sous le dispositif de distribution.

## Patentansprüche

1. Maschine (10) zur generativen Fertigung durch Aufbringen eines Pulverbetts, wobei die Maschine eine Arbeitsebene (18), einen Arbeitsbereich (20, 120), eine Vorrichtung zum Aufbringen (29, 129) einer Pulverschicht auf den Arbeitsbereich und eine Wärme- oder Energiequelle (14), die zum selektiven Verfestigen einer auf den Arbeitsbereich aufgebrachten Pulverschicht verwendet wird, umfasst, wobei die Vorrichtung zum Aufbringen einer Pulverschicht ein bewegliches Element (28, 128) zum Aufnehmen von Pulver, das sich in Bezug auf die Arbeitsebene und in der Nähe des Arbeitsbereichs bewegt, eine Vorrichtung zum Verteilen (32, 132) einer Pulverschnur auf dem beweglichen Element und eine Vorrichtung zum Ausbreiten (30) der Pulverschnur des beweglichen Elements zum Arbeitsbereich hin umfasst, wobei das bewegliche Element (28) die Form eines Schiebers (36) annimmt, der translatorisch beweglich in eine horizontale Richtung (D36) quer zum Arbeitsbereich (20) gelagert ist und sich zwischen einer zurückgezogenen Position, in der sich dieser Schieber außerhalb der Bahn der Vorrichtung zum Ausbreiten von Pulver (30) befindet, und einer ausgefahrenen Position, in der sich dieser Schieber mindestens teilweise in der Bahn der Vorrichtung zum Ausbreiten von Pulver (30) erstreckt, bewegt oder wobei das bewegliche Element (128) den Arbeitsbereich (120) außen über seinen gesamten Umfang umgibt und sich rotatorisch um den Arbeitsbereich (120) herum bewegt, mindestens ein Teil der oberen Fläche (S28, S128) des beweglichen Elements sich oberhalb der oberen Fläche (S18) der Arbeitsebene befindet und/oder mindestens ein Teil der oberen Fläche (S28, S128) des beweglichen Elements sich unterhalb der oberen Fläche (S18) der Arbeitsebene befindet, wobei sich bei der Maschine zur generativen Fertigung mindestens ein Teil der oberen Fläche des beweglichen Elements in der Verlängerung der oberen Fläche der Arbeitsebene befindet und dieses bewegliche Element auch mindestens eine erhabene Form (60) umfasst, die sich oberhalb seiner oberen Fläche erhebt, und/oder mindestens eine vertiefte Form (62), die sich unterhalb ihrer oberen Fläche erstreckt.

2. Maschine (10) zur generativen Fertigung durch Aufbringen eines Pulverbetts nach Anspruch 1, bei der eine erhabene Form auf die obere Fläche des beweglichen Elements gedruckt wird.

3. Maschine (10) zur generativen Fertigung durch Aufbringen eines Pulverbetts nach Anspruch 1, bei der eine vertiefte Form in der oberen Fläche des beweglichen Elements ausgearbeitet wird.

4. Maschine (10) zur generativen Fertigung durch Aufbringen eines Pulverbetts nach Anspruch 2 oder Anspruch 3, bei der eine erhabene Form oder eine vertiefte Form aus einer Mehrzahl von elementaren Mustern (M) zusammengesetzt ist.

5. Maschine (10) zur generativen Fertigung durch Aufbringen eines Pulverbetts nach Anspruch 1, bei der eine einzige vertiefte Form (64) in der oberen Fläche des beweglichen Elements vorgesehen ist.

6. Maschine (10) zur generativen Fertigung durch Aufbringen eines Pulverbetts nach Anspruch 5, bei der die in der oberen Fläche des beweglichen Elements vorgesehene einzige vertiefte Form die Form einer Ausnehmung mit rechteckigem Querschnitt in einer vertikalen Ebene und mit einer Höhe in einer vertikalen Richtung zwischen 60 Mikrometern und 5 Millimetern oder zwischen 150 Mikrometern und 2 Millimetern annimmt.

7. Maschine (10) zur generativen Fertigung durch Aufbringen eines Pulverbetts nach Anspruch 5 oder Anspruch 6, bei der sich die einzige vertiefte Form über eine Breite (W64) von mindestens 80 % der Breite (W28) der oberen Fläche des beweglichen Elements erstreckt.

8. Maschine (10) zur generativen Fertigung durch Aufbringen eines Pulverbetts nach einem der Ansprüche 5 bis 7, bei der sich die einzige vertiefte Form in der Länge über eine Distanz erstreckt, die größer als das größte Quermaß des Arbeitsbereichs ist.

9. Maschine (10) zur generativen Fertigung durch Aufbringen eines Pulverbetts nach Anspruch 1, bei der sich das bewegliche Element in der Nähe des Arbeitsbereichs in einer Aufnahme (38) bewegt, die in der Arbeitsebene vorgesehen ist.

10. Maschine (10) zur generativen Fertigung durch Aufbringen eines Pulverbetts nach einem der vorhergehenden Ansprüche, bei der, wenn die Vorrichtung zum Verteilen einer Pulverschnur feststehend ist, ein bewegliches Element sich unter der Vorrichtung zum Verteilen bewegt.

## Claims

1. Machine (10) for additive manufacturing by powder bed deposition, the machine comprising a work top (18), a work area (20, 120), a device (29, 129) for depositing a layer of powder onto the work area and a heat or energy source (14) used to selectively consolidate a layer of powder deposited onto the work area, the device for depositing a layer of powder comprising a movable element (28, 128) for receiving powder moving relative to the work top and in the vicinity of the work area, a device (32, 132) for dispensing a bead of powder onto the movable element and a device (30) for spreading the bead of powder from the movable element towards the work area, the additive manufacturing machine is **characterized in that** the movable element (28) assumes the form of a slide (36) mounted to translationally move in a transverse horizontal direction (D36) relative to the work area (20) and moving between a retracted position, in which said slide is located outside the trajectory of the powder spreading device (30), and a deployed position, in which said slide at least partly extends into the trajectory of the powder spreading device (30) or the movable element (128) externally surrounding the work area (120) over its entire circumference and rotationally moving around the work area (120), at least part of the upper surface (S28, S128) of said movable element is located above the upper surface (S18) of the work top and/or at least part of the upper surface (S28, S128) of said movable element is located below the upper surface (S18) of the work top, machine for additive manufacturing wherein at least part of the upper surface of said movable element is located in the extension of the upper surface of the work top, and wherein this movable element also comprises at least one raised form (60) rising above its upper surface and/or at least one recessed form (62) extending below its upper surface.

2. Machine (10) for additive manufacturing by powder bed deposition according to Claim 1, wherein a raised form is printed onto the upper surface of the movable element.

3. Machine (10) for additive manufacturing by powder bed deposition according to Claim 1, wherein a recessed form is machined in the upper surface of the movable element.

4. Machine (10) for additive manufacturing by powder bed deposition according to Claim 2 or Claim 3, wherein a raised form or a recessed form is made up of a plurality of elementary patterns (M).

5. Machine (10) for additive manufacturing by powder bed deposition according to Claim 1, wherein a single recessed form (64) is provided in the upper surface of the movable element.

6. Machine (10) for additive manufacturing by powder bed deposition according to Claim 5, wherein the single recessed form provided in the upper surface of the movable element assumes the form of a rectangular section recess in a vertical plane and assumes a height in a vertical direction ranging between 60 micrometres and 5 millimetres, or between 150 micrometres and 2 millimetres.

7. Machine (10) for additive manufacturing by powder bed deposition according to Claim 5 or Claim 6, wherein the single recessed form extends over a width (W64) at least equal to 80% of the width (W28) of the upper surface of the movable element.

8. Machine (10) for additive manufacturing by powder bed deposition according to any of Claims 5 to 7, wherein the single recessed form extends lengthwise over a distance that is greater than the largest transverse dimension of the work area.

9. Machine (10) for additive manufacturing by powder bed deposition according to Claim 1, wherein the movable element moves in the vicinity of the work area in a receptacle (38) provided in the work top.

10. Machine (10) for additive manufacturing by powder bed deposition according to any of the preceding claims, wherein, with the device for dispensing a bead of powder being fixed, a movable element moves under the dispensing device.
